**Europäisches Patentamt**

**European Patent Office**

**Office européen des brevets**

(19)

(11) Veröffentlichungsnummer: **0 093 845**
**B1**

# EUROPÄISCHE PATENTSCHRIFT

(12)

(45) Veröffentlichungstag der Patentschrift:
26.11.86

(21) Anmeldenummer: **83101901.3**

(22) Anmeldetag: **26.02.83**

(51) Int. Cl.⁴: **F 02 B  33/44,** F 16 L  27/12,
F 16 L  21/08

(54) **Verbindungsleitung zwischen einem Verdichter und einem Saugrohr einer aufgeladenen Brennkraftmaschine.**

(30) Priorität: **11.05.82  DE 3217633**

(43) Veröffentlichungstag der Anmeldung:
**16.11.83 Patentblatt 83/46**

(45) Bekanntmachung des Hinweises auf die Patenterteilung:
**26.11.86 Patentblatt 86/48**

(84) Benannte Vertragsstaaten:
**DE FR GB IT**

(56) Entgegenhaltungen:
**CH-A-172 924**
**DE-A-3 136 830**
**DE-B-1 256 005**
**FR-A-2 489 472**
**GB-A-503 003**
**GB-A-1 361 185**
**GB-A-2 079 367**

(73) Patentinhaber: **Dr.Ing.h.c. F. Porsche
Aktiengesellschaft, Porschestrasse 42, D-7000
Stuttgart 40 (DE)**

(72) Erfinder: **Ampferer, Herbert, Dipl.- Ing.,
Schillerstrasse 36, D-7120 Bietigheim- Bissingen
(DE)**

## Beschreibung

Die Erfindung betrifft eine Verbindungsleitung zwischen einem Verdichter eines Abgasturboladers und einem Saugrohr einer Brennkraftmaschine, wobei die Verbindungsleitung wenigstens zwei Rohrabschnitte aufweist, zwischen denen eine mittels lösbarer Einrichtung gehaltene Brücke wirksam ist.

Eine bekannte Verbindungleitung (DE-A-31 36 830) der eingangs genannten Gattung ist mit einem Gummikupplungsstück versehen. Dieses Gummikupplungsstück ist zum einen für Brennkraftmaschinen, die mit hohem Ladedruck betrieben werden und eine große Wärmeabstrahlung aufweisen, wegen seiner geringen Druckaufnahme und Wärmeresistenz wenig geeignet und zum anderen besitzt es eine zu geringe Steifigkeit, was beim Betrieb der Brennkraftmaschine und einer entsprechenden Länge der Verbindungsleitung zu Undichtigkeiten verursachenden Bewegungen führt.

Ferner ist es bekannt (FR-A-24 89 472), eine Verbindungsleitung durch zwei paßgenau ineinandergesetzte Rohrstücke zu bilden, die mittels einer Brücke in Lage sind. Mit dieser Verbindungsleitung können keine Axial- und Winkeltoleranzen ausgeglichen werden.

Aufgabe der Erfindung ist es, an einer Verbindungsleitung zwischen einem Verdichter eines Abgasturboladers und einem Saugrohr einer Brennkraftmaschine solche Vorkehrungen zu treffen, daß die auftretenden Toleranzen ausgeglichen und die Montage der Verbindungsleitung einfach ist.

Erfindungsgemäß wird diese Aufgabe durch die Merkmale des kennzeichnenden Teils des Anspruches 1 gelöst. Weitere, die Erfindung ausgestaltenden Merkmale sind in den Unteransprüchen enthalten.

Die mit der Erfindung insbesondere erzielten Vorteile sind darin zu sehen, daß die übereinandergeschobenen Rohrabschnitte und die Brücke eine leicht montierbare und steife (gute Dichtigkeit) Verbindungsleitung schaffen, durch die selbst relativ große Winkel- und Axialtoleranzen gut ausgeglichen werden können. Die die Brücke bildeten Schalen sind im Aufbau einfach und stützen sich funktionsgerecht an den Rohrabschnitten ab. Die Flansche dienen gleichzeitig zur Aufnahme der lösbaren Ermittlungen, die durch handelsübliche Spannbänder dargestellt sein können. Verläuft die Verbindungsleitung oberhalb eines Ventildeckels quer zur Brennkraftmaschine, so läßt sich ein Rohrabschnitt an diesem auf einfache Weise befestigen, wodurch eine gute Halterung der Verbindungsleitung erzielt wird. Wenn schließlich der andere Rohrabschnitt zwischen Brücke und Verdichter des Abgasturboladers einen winkelförmigen Verlauf aufweist, so ist hierdurch eine einfache Unterbringung des Abgasturboladers, z.B. in der Nähe des Kurbelgehäuses, möglich.

In der Zeichnung ist ein Ausführungsbeispiel der Erfindung dargestellt, das nachstehend näher beschrieben ist. Es zeigt

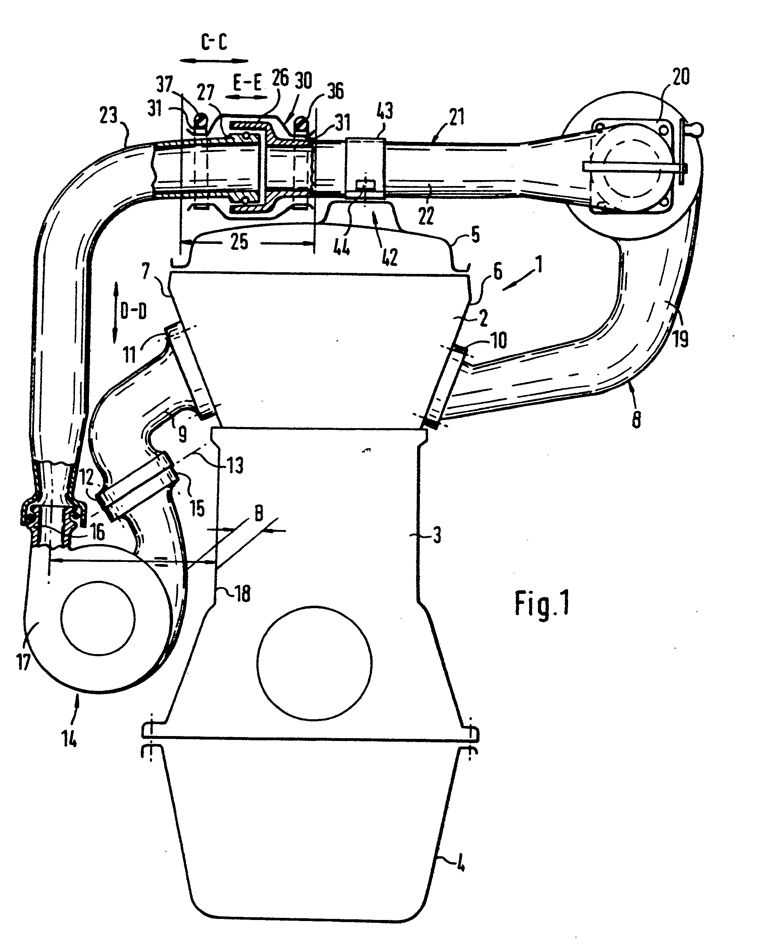

Fig. 1 eine Seitenansicht einer Brennkraftmaschine mit der erfindungsgemäßen Verbindungsleitung,

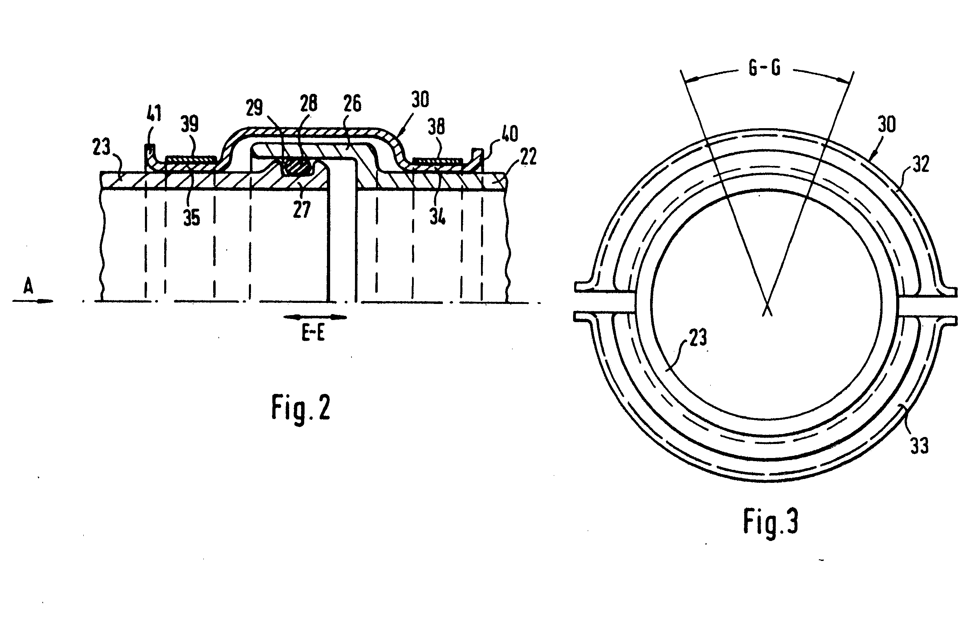

Fig. 2 eine Einzelheit der Fig. 1 in größerem Maßstab,

Fig. 3 eine Ansicht in Pfeilrichtung A der Fig. 2.

Eine Brennkraftmaschine 1 wird gebildet durch einen Zylinderkopf 2, ein Kurbelgehäuse 3 und eine Ölwanne 4. Der Zylinderkopf 2 ist mit einem Ventildeckel 5 versehen, und an seinen Längsseiten 6, 7 sind ein Ansaugkrümmer 8, beziehungsweise ein Auslaßkrümmer 9 angeschlossen. Beide sind durch Flansche 10, 11 und nicht näher dargestellte Schraubenmittel am Zylinderkopf 2 befestigt.

Der Auslaßkrümmer 9 zeigt mit einem weiteren Befestigungsflansch 12 nach unten, wobei eine Anschlußebene 13 schräg zum Kurbelgehäuse 3 verläuft, dergestalt, daß ein Abgasturbolader 14 der mit einem Flansch 15 an den Befestigungsflansch 12 angeschlossen ist, möglichst dicht (Abstand B) am Kurbelgehäuse 3 liegt und daß sich ein Ausgangsstutzen 16 eines Verdichters 17 des Abgasturboladers 14 etwa parallel zu einer senkrechten Wand 18 des Kurbelgehäuses 3 erstreckt. Die Ausbildung des Auslaßkrümmers 9 ermöglicht eine räumlich günstige Anordnung des Abgasturboladers 14 unterhalb des Zylinderkopfs 2 und neben dem Kurbelgehäuse 3.

Der Ansaugkrümmer 8 weist einen nach oben gerichteten Krümmerbereich 19 auf, an dessen Ende ein Drosselklappenstutzen 20 angebracht ist.

Zwischen dem Ausgangsstutzen 16 des Verdichters 17 und dem entfernt, d.h. an der gegenüberliegenden Längsseite 6 liegenden Drosselklappenstutzen 20 ist eine Verbindungsleitung 21 vorgesehen, die einerseits oberhalb des Ventildeckels 5 in Querrichtung C-C und andererseits in senkrechter Richtung D-D der Brennkraftmaschine 1 verläuft.

Die Verbindungsleitung 21 wird durch zwei Rohrabschnitte 22, 23 gebildet, die in einem oberhalb des Ventildeckels 5 liegenden Verbindungsbereich 25 ineinandergeschoben sind. Hierzu weist der Rohrabschnitt 22 ein im Durchmesser größeres Aufnahmeteil 26 auf, das ein Anschlußteil 27 des Rohrabschnittes 23 übergreift. Unter Vermittlung einer Dichtungseinrichtung 28, die in einer U-förmigen Rinne 29 des Anschlußteils 26 angeordnet ist, wirkt das Aufnahmeteil 26 und das Anschlußteil 27 gasdicht zusammen.

Damit die Verbindungsleitung 21, die ja am Verdichter 17 des Abgasturboladers 14 und am Drosselklappenstutzen 20 befestigt ist, während des Betriebs der Brennkraftmaschine 1 im Verbindungsbereich 25 nicht in unkontrollierte zu Undichtigkeiten führende Schwingungen gerät, sind die Rohrabschnitte 22, 23 im Verbindungsbereich 25 mittels einer Brücke 30 und lösbaren Einrichtungen 31 in Lage gehalten.

Die Brücke 30 wird im Ausführungsbeispiel durch zwei profilierte Halbschalen 32, 33 gebildet, die zusammengesetzt einen die Rohrabschnitte 22, 23 annähernd allseitig umgebenden Körper darstellen und sich mit Flanschen 34, 35 an den Rohrabschnitten 22, 23 abstützen; die Rohrabschnitte 22, 23 weisen dort gleiche Durchmesser auf, so daß zur Herstellung der Halbschalen 32, 33 lediglich ein Werkzeug erforderlich ist. Die lösbaren Einrichtungen 31 werden durch mit Schrauben 36, 37 versehene Spannbänder 38, 39 gebildet, die im Bereich der Flansche 34, 35 vorgesehen sind. Die Enden der Flansche 34, 35 sind zur Montagevereinfachung mit Abstellungen 40, 41 versehen, die auch noch zur Versteifung der Brücke 30 beitragen.

Der Rohrabschnitt 22, der im wesentlichen einen geraden Verlauf aufweist, ist bei 42 am Ventildeckel 5 mittels eines ihn teilweise umschließenden rohrschellenartigen Gliedes 43 und Schrauben 44 befestigt. Demgegenüber ist der Rohrabschnitt 23 als winkelförmiger Krümmer ausgeführt, der lediglich am Verdichter 17 und an der Brücke 30 fest angeordnet ist.

Die Montage der Verbindungsleitung 21 erfolgt folgendermaßen: Die Rohrabschnitte 22, 23 werden ineinandergesetzt und mittels der Brücke so in Lage gehalten, daß die Rohrabschnitte 22, 23 in Richtung E-E und G-G beweglich sind. Danach wird die Verbindungsleitung 21 mit dem Verdichter 17 und dem Drosselklappenstutzen 14 durch Schrauben fest verbunden. Die jetzt an der Verbindungsleitung 21 auftretenden Toleranzen (in Richtung E-E und G-G) werden durch Axialund Winkelbewegungen der Rohrabschnitte 22, 23 im Bereich des Aufnahmeteils 26 und des Anschlußteils 27 ausgeglichen. Schließlich werden die Spannbänder 38, 39 mittels der Schrauben 36, 37 festgezogen.

### Patentansprüche

Verbindungsleitung zwischen einem Verdichter eines Abgasturboladers und einem Saugrohr einer Brennkraftmaschine, wobei die Verbindungsleitung wenigstens zwei Rohrabschnitte aufweist, zwischen denen eine mittels lösbarer Einrichtungen gehaltene Brücke wirksam ist, gekennzeichnet durch die Kombination folgender Merkmale:
a) die Rohrabschnitte (22, 23) sind wirkel- und axialtoleranzausgleichbar ineinandergeschoben, wobei die Rohrabschnitte (22, 23) unter Vermittlung einer Dichtungseinrichtung (28) zusammenwirken;
b) die Dichtungseinrichtung (28) ist in einer Rinne (29) angeordnet, die zwischen einem Aufnahmeteil (26) und einem Anschlußteil (27) in einem der Rohrabschnitte (22, 23) vorgesehen ist;
c) die Brücke (30) wird durch zwei profilierte Halbschalen (32, 33) gebildet, die sich mit Flanschen (34, 35) an Rohrabschnitten (22, 23) abstützen;
d) die Halbschalen (32, 33) sind so ausgebildet und an den Rohrabschnitten (22, 23) mittels der lösbaren Einrichtung (31) befestigt, daß die Halbschalen einen die Rohrabschnitte annähernd allseitig umgebenden Körper darstellen und die Rohrabschnitte (22, 23) starr verbinden;
e) die Rohrabschnitte (22, 23) weisen im Bereich der Flansche (34, 35) gleiche Durchmesser auf;
f) die lösbaren Einrichtungen (31) sind im Bereich der Flansche (34, 35) vorgesehen.

### Claim

Connecting duct between the compressor of a waste gas turbocharger and an internal combustion engine, the connecting duct comprising at least two pipe sections, between which a bridge held by means of detachable devices is operative, characterised by the combination of the following features:
a) the pipe sections (22, 23) are inserted into one another so as to be compensable in respect of angular and axial tolerance, the pipe sections (22, 23) co-operating via the sealing device;
b) the sealing device (28) is disposed in a channel (29) which is provided between a receiving portion (26) and a connecting portion (27) in one of the pipe sections (22, 23);
c) the bridge (30) is formed by two profiled half shells (32, 33), which are supported by flanges (34, 35) on the pipe sections (22, 23);
d) the half shells (32, 33) are formed and secured to the pipe section (22, 23) by means of the detachable device (31) in such a way that the hemispheres represent a body which almost completely surrounds the pipe sections on all sides, and rigidly connect the pipe sections (22, 23);
e) the pipe sections (22, 23) have the same diameter in the region of the flanges (34, 35);
f) the detachable devices (31) are provided in the region of the flanges (34, 35).

### Revendication

Conduit de liaison entre un compresseur d'un turbo-compresseur à gaz d'échappement et un collecteur d'admission d'un moteur à combustion interne, ledit conduit de liaison comportant au moins deux sections tubulaires entre lesquelles agit un pont maintenu au moyen de dispositifs amovibles, caractérisé par la combinaison suivante:
a) les sections tubulaires (22, 23) sont emmanchées avec possibilité de compensation des tolérances angulaires et axiales, lesdites sections (22, 23) coopérant par l'entremise d'un dispositif d'étanchéité (28);
b) le dispositif d'étanchéité (28) est placé dans une rainure (29) prévue entre une partie de réception (26) et une partie de raccordement (27) dans l'une des sections (22, 23);

c) le pont (30) est constitué par deux demi-coques (32, 33) profilées qui s'appuient par des brides (34, 35) sur les sections (22, 23);

d) les demi-coques (32, 33) sont conformées et fixées aux sections (22, 23) au moyen des dispositifs amovibles (31) de telle façon que les demi-coques constituent une pièce entourant approximativement de toutes parts les sections tubulaires et reliant rigidement lesdites sections (22, 23);

e) les sections (22, 23) présentent des diamètres égaux dans la zone des brides (34, 35);

f) les dispositifs amovibles (31) sont prévus dans la zone des brides (34, 35).

Fig.1

Fig.3

Fig.2